(19) Europäisches Patentamt
European Patent Office
Office européen des brevets

(11) Veröffentlichungsnummer: **0 459 320 B1**

(12) **EUROPÄISCHE PATENTSCHRIFT**

(45) Veröffentlichungstag der Patentschrift: **16.08.95**

(51) Int. Cl.[6]: **C08F 4/602**, C08F 10/00

(21) Anmeldenummer: **91108476.2**

(22) Anmeldetag: **24.05.91**

# (54) Verfahren zur Herstellung eines Polyolefins.

(30) Priorität: **30.05.90 DE 4017331**

(43) Veröffentlichungstag der Anmeldung:
**04.12.91 Patentblatt 91/49**

(45) Bekanntmachung des Hinweises auf die Patenterteilung:
**16.08.95 Patentblatt 95/33**

(84) Benannte Vertragsstaaten:
**BE DE DK ES FR GB GR IT LU NL**

(56) Entgegenhaltungen:

**MAKROMOLEKULARE CHEMIE, Band 19, Nr. 10, Okfober 1989, Seiten 2357-2361**

(73) Patentinhaber: **HOECHST AKTIENGESELLSCHAFT**

**D-65926 Frankfurt am Main (DE)**

(72) Erfinder: **Herrmann, Hans-Friedrich, Dr.**
**Stiftstrasse 34**
**W-6000 Frankfurt am Main (DE)**
Erfinder: **Böhm, Ludwig, Dr.**
**Leonhardtstrasse 36**
**W-6234 Hattersheim am Main (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

**Beschreibung**

Die Erfindung bezieht sich auf ein Verfahren zur Herstellung eines Polyolefins in Gegenwart eines Metallocens und eines Aluminoxans, welches in einem polaren aprotischen Lösemittel, insbesondere einem halogenierten Kohlenwasserstoff durchgeführt wird.

Bei der Suspensionspolymerisation von 1-Olefinen werden üblicherweise inerte Kohlenwasserstoffe, wie beispielsweise Benzine und Dieselöle verschiedener Siedebereiche, als Suspensionsmittel eingesetzt.

Es ist bekannt, Ethylen mittels eines heterogenen Ziegler-Katalysators bei -60 bis -100 °C in einem Halogenkohlenwasserstoff als Lösemittel zu polymerisieren (vgl. Bestian et al., Angew. Chem. 74, S. 955-965, 1962). Allerdings sind derartige Polymerisationstemperaturen wirtschaftlich uninteressant. Außerdem werden bei Temperaturen oberhalb -50 °C stark verzweigte, ölige Produkte erhalten.

Weiterhin ist bekannt, Propylen bei 20 °C in Methylenchlorid zu polymerisieren (vgl. Longo et al., Makromol.Chem. 190, S. 2357-2361 (1989)). Als Katalysator dient 1,1'-Ethylen-di-(4,5,6,7-tetrahydroindenyl)-zirkoniumdichlorid zusammen mit Trimethylaluminium und Dimethylaluminiumfluorid (DMAF). Zum Vergleich werden auch Polymerisationen in Toluol durchgeführt. Es zeigt sich, daß das System in Methylenchlorid eine größere Aktivität zeigt als in Toluol, die Ausbeute mit dem System in Toluol wird jedoch bei weitem nicht erreicht.

Es wurde nunmehr gefunden, daß polare aprotische Lösemittel vorteilhaft als Suspensionsmittel bei der Suspensionspolymerisation von 1-Olefinen mittels löslicher Metallocen/Aluminoxan-Katalysatoren eingesetzt werden können.

Die Erfindung betrifft somit ein Verfahren zur Herstellung eines Polyolefins durch Polymerisation eines Olefins der Formel $R^a$-CH = CH-$R^b$, worin $R^a$ und $R^b$ gleich oder verschieden sind und ein Wasserstoffatom oder einen $C_1$-$C_{20}$-Alkylrest bedeuten oder $R^a$ und $R^b$ mit dem sie verbindenden C-Atom einen Ring mit 4 bis 10 C-Atomen bilden, bei einer Temperatur von -40 °C bis 150 °C, bei einem Druck von 0,5 bis 100 bar, in Lösung oder in Suspension, in Gegenwart eines Katalysators, welcher aus einer Verbindung der Formel I oder II

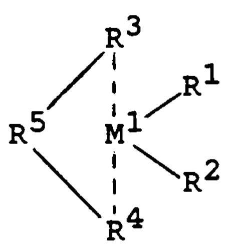 (I) 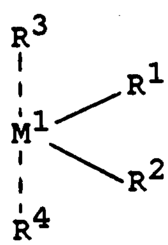 (II),

worin

- $M^1$ Titan, Zirkon oder Hafnium ist,
- $R^1$ und $R^2$ gleich oder verschieden sind und ein Wasserstoffatom, ein Halogenatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe oder eine $C_8$-$C_{40}$-Arylalkenylgruppe bedeuten,
- $R^3$ und $R^4$ gleich oder verschieden sind und einen ein- oder mehrkernigen Kohlenwasserstoffrest, welcher mit dem Zentralatom $M^1$ eine Sandwichstruktur bilden kann, bedeuten,
- $R^5$

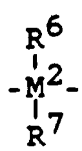 , 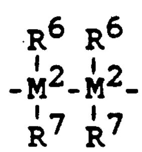 , 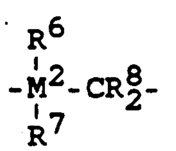 , 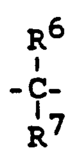 , 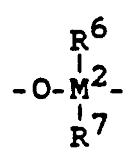 , 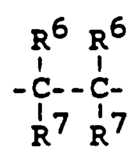 ,

= $BR^6$, = $AlR^6$, -O-, -S-, = SO, = $SO_2$, = $NR^6$, = CO, = $PR^6$ oder = P(O)$R^6$ ist, wobei $R^6$, $R^7$ und $R^8$ gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Fluorarylgruppe, eine

$C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder $R^6$ und $R^7$ oder $R^6$ und $R^8$ jeweils mit den sie verbindenden Atomen einen Ring bilden, und

$M^2$ Silizium, Germanium oder Zinn ist, und einem Aluminoxan der Formel III

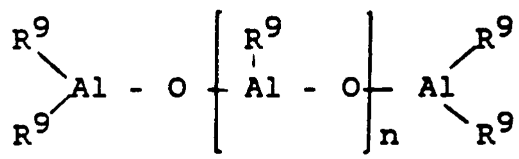

(III)

für den linearen Typ und/oder der Formel IV

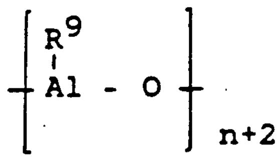

(IV)

für den cyclischen Typ besteht, wobei in den Formeln III und IV die Reste $R^9$ gleich oder verschiden sind und eine $C_1$-$C_6$-Alkylgruppe oder Phenyl oder Benzyl bedeuten und n eine ganze Zahl von 2 bis 50 ist, dadurch gekennzeichnet, daß die Polymerisation in Gegenwart eines polaren aprotischen Lösemittels mit einer statischen Dielektrizitätskonstante e bei 20 °C von mehr als 3 durchgeführt wird.

Der für das erfindungsgemäße Verfahren zu verwendende Katalysator besteht aus einem Aluminoxan und einem Metallocen der Formel I oder II

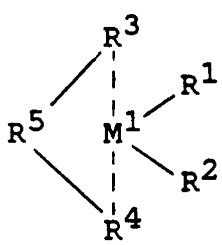

(I)

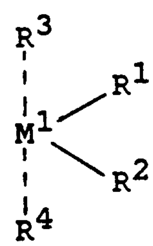

(II).

In diesen Formeln ist $M^1$ ein Metall aus der Gruppe Titan, Zirkon, Hafnium, vorzugsweise Zirkon und Hafnium.

$R^1$ und $R^2$ sind gleich oder verschieden und bedeuten ein Wasserstoffatom, eine $C_1$-$C_{10}$-, vorzugsweise $C_1$-$C_3$-Alkylgruppe, eine $C_1$-$C_{10}$-, vorzugsweise $C_1$-$C_3$-Alkoxygruppe, eine $C_6$-$C_{10}$-, vorzugsweise $C_6$-$C_8$-Arylgruppe, eine $C_6$-$C_{10}$-, vorzugsweise $C_6$-$C_8$-Aryloxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe oder ein Halogenatom, vorzugsweise Chlor.

$R^3$ und $R^4$ sind gleich oder verschieden und bedeuten einen ein- oder mehrkernigen Kohlenwasserstoffrest, welcher mit dem Zentralatom $M^1$ eine Sandwichstruktur bilden kann.

Bevorzugt sind $R^3$ und $R^4$ Fluorenyl, Cyclopentadienyl und Indenyl, wobei die Grundkörper noch zusätzliche Substituenten tragen können.

$R^5$ ist eine ein- oder mehrgliedrige Brücke, welche die Reste $R^3$ und $R^4$ verknüpft, und bedeutet

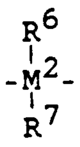 , 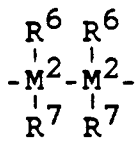 , 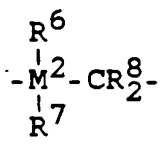 , 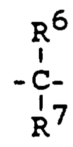 , 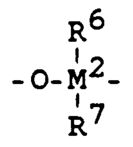 , 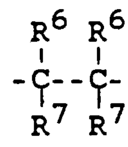 ,

$=BR^6$, $=AlR^6$, -O-, -S-, $=SO$, $=SO_2$, $=NR^6$, $=CO$, $=PR^6$ oder $=P(O)R^6$, wobei $R^6$, $R^7$ und $R^8$ gleich oder verschieden sind und ein Wasserstoffatom, ein Halogenatom, vorzugsweise Chlor, eine $C_1$-$C_{10}$-, vorzugsweise $C_1$-$C_3$-Alkylgruppe, insbesondere Methylgruppe, eine $C_1$-$C_{10}$-Fluoralkylgruppe, vorzugsweise $CF_3$-Gruppe, eine $C_6$-$C_{10}$-Fluorarylgruppe, vorzugsweise Pentafluorphenylgruppe, eine $C_6$-$C_{10}$-, vorzugsweise $C_6$-$C_8$-Arylgruppe, eine $C_1$-$C_{10}$-, vorzugsweise $C_1$-$C_4$-Alkoxygruppe, insbesondere Methoxygruppe, eine $C_2$-$C_{10}$-, vorzugsweise $C_2$-$C_4$-Alkenylgruppe, eine $C_7$-$C_{40}$-vorzugsweise $C_7$-$C_{10}$-Arylalkylgruppe, eine $C_8$-$C_{40}$-, vorzugsweise $C_8$-$C_{12}$-Arylalkenylgruppe oder eine $C_7$-$C_{40}$-, vorzugsweise $C_7$-$C_{12}$-Alkylarylgruppe bedeuten, oder $R^6$ und $R^7$ oder $R^6$ und $R^8$ bilden jeweils zusammen mit den sie verbindenden Atomen einen Ring.

$M^2$ ist Silizium, Germanium oder Zinn, bevorzugt Silizium oder Germanium.

$R^5$ ist vorzugsweise $=CR^6R^7$, $=SiR^6R^7$, $=GeR^6R^7$, -O-, -S-, $=SO$, $=PR^6$ oder $=P(O)R^6$.

Die beschriebenen Metallocene der Formel I können nach folgenden allgemeinen Verfahren hergestellt werden:

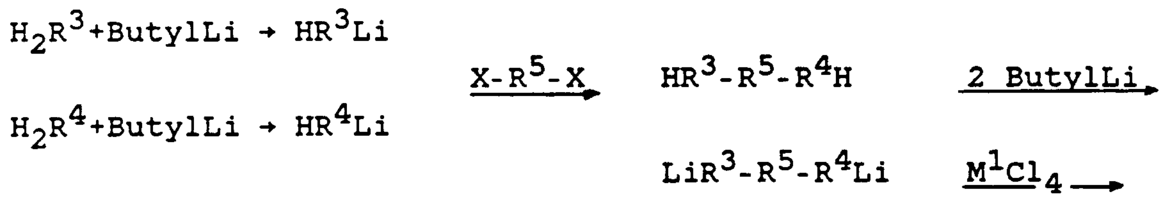

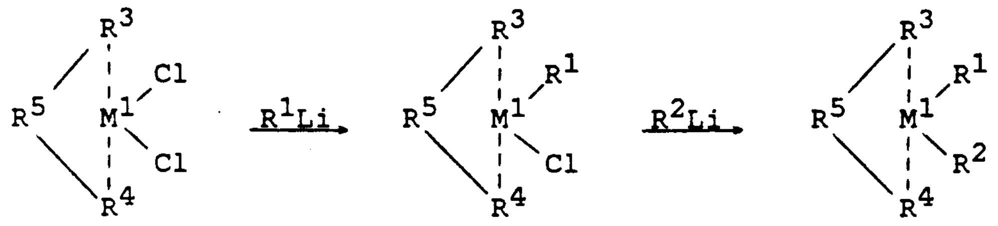


(X = Cl, Br, J, O-Tosyl)

oder

$H_2R^3$ + ButylLi → $HR^3Li$

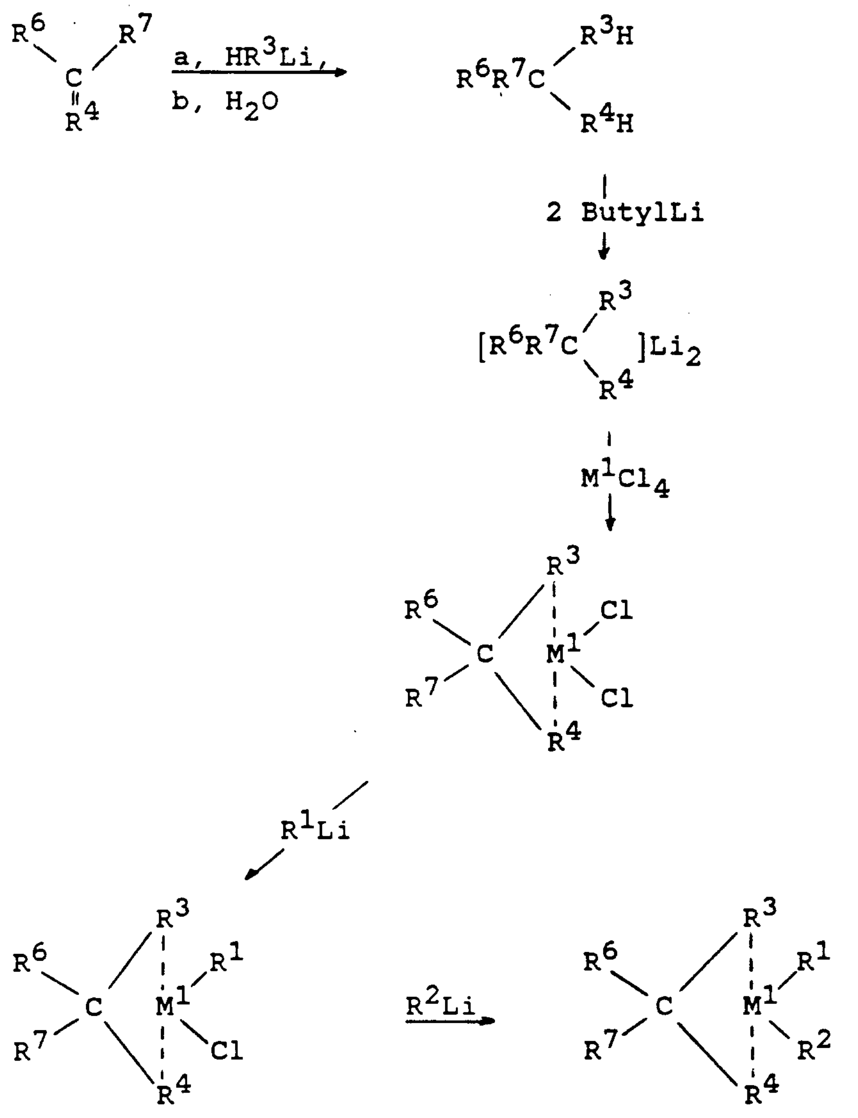


Die Metallocene der Formel II können gewonnen werden, indem ein Metallchlorid $M^1Cl_4$ nacheinander mit den Lithiumverbindungen $R^3Li$ und $R^4Li$, und eventuell $R^1Li$ oder $R^2Li$ umgesetzt wird.

Bevorzugt eingesetzte Metallocene sind (Arylalkyliden)(9-fluorenyl)(cyclopentadienyl)zirkondichlorid, (Diarylmethylen)(9-fluorenyl)(cyclopentadienyl)zirkondichlorid, (Dialkylmethylen)(9-fluorenyl)-(cyclopentadienyl)-zirkondichlorid, Biscyclopentadienyl)zirkondichlorid, (Dimethylsilyl)(bisindenyl)-zirkondichlorid, (Ethylen)(bis-indenyl)-zirkondichlorid, (Bis-dimethylsilyl)(bis-indenyl)zirkondichlorid, (Propylen)(bis-indenyl)-zirkondichlorid, (Diphenylmethylen)(9-fluorenyl)(cyclopentadienyl)zirkondichlorid, (Bis-cyclopentydienyl)-zirkondibenzyl, sowie die jeweils entsprechenden Hafnium-Analogen.

Der Cokatalysator ist ein Aluminoxan der Formel III

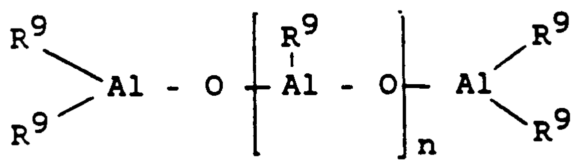

(III)

für den linearen Typ und/oder der Formel IV

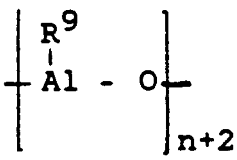

(IV)

für den cyclischen Typ. In diesen Formeln sind die Reste $R^9$ gleich oder verschieden und bedeuten eine $C_1$-$C_6$-Alkylgruppe, vorzugsweise Methyl, Ethyl oder Isobutyl, Butyl oder Neopentyl, oder Phenyl oder Benzyl. Besonders bevorzugt ist Methyl. n ist eine ganze Zahl von 2 bis 50, bevorzugt 5 bis 40. Die exakte Struktur des Aluminoxans ist jedoch nicht bekannt.

Das Aluminoxan kann auf verschiedene Art und Weise hergestellt werden.

Eine Möglichkeit ist die vorsichtige Zugabe von Wasser zu einer verdünnten Lösung eines Aluminiumtrialkyls, indem die Lösung des Aluminiumtrialkyls, vorzugsweise Aluminiumtrimethyl, und das Wasser jeweils in kleinen Portionen in eine vorgelegte größere Menge eines inerten Lösemittels eingetragen werden und zwischendurch das Ende der Gasentwicklung jeweils abgewartet wird.

Bei einem anderen Verfahren wird fein gepulvertes Kupfersulfatpentahydrat in Toluol aufgeschlämmt und in einem Glaskolben unter Inertgas bei etwa -20 °C mit soviel Aluminiumtrialkyl versetzt, daß für je 4 Al-Atome etwa 1 mol $CuSO_4 \cdot 5H_2O$ zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30 °C ansteigt. Anschließend wird das im Toluol gelöste Aluminoxan von dem Kupfersulfat abfiltriert und die Lösung im Vakuum eingeengt. Es wird angenommen, daß bei diesen Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -20 bis 100 °C in einem inerten aliphatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1 : 1 bis 50 : 1 - vorzugsweise 5 : 1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen $Al_2(SO_4)_3 \cdot 16H_2O$ und $Al_2(SO_4)_3 \cdot 18H_2O$ mit dem besonders hohen Kristallwassergehalt von 16 bzw. 18 mol $H_2O$/mol $Al_2(SO_4)_3$.

Eine weitere Variante zur Herstellung von Aluminoxanen besteht darin, Aluminiumtrialkyl, vorzugsweise Aluminiumtrimethyl, in Gegenwart eines Feststoffes, beispielsweise $SiO_2$, in dem vorgelegten Suspensionsmittel, vorzugsweise in Heptan oder Toluol, zu lösen und dann die Aluminiumverbindung mit Wasser umzusetzen.

Neben den zuvor geschilderten Verfahren zur Herstellung von Aluminoxanen gibt es weitere, welche brauchbar sind. Unabhängig von der Art der Herstellung ist allen Aluminoxanlösungen ein wechselnder Gehalt an nicht umgesetztem Aluminiumtrialkyl, das in freier Form oder als Addukt vorliegt, gemeinsam. Dieser Gehalt hat einen noch nicht genau geklärten Einfluß auf die katalytische Wirksamkeit, der je nach eingesetzter Metallocenverbindung verschieden ist.

Es ist möglich, das Metallocen vor dem Einsatz in der Polymerisationsreaktion mit einem Aluminoxan der Formeln III und/oder IV vorzuaktivieren. Dadurch wird in einigen Fällen die Polymerisationsaktivität

deutlich erhöht und die Kornmorphologie verbessert. Bei der Verwendung eines hochpolaren Lösemittels als Polymerisationsmedium kann die Voraktivierung entfallen. Diese Voraktivierung der Übergangsmetallverbindung wird in Lösung vorgenommen. Bevorzugt wird dabei das Metallocen in einer Lösung des Aluminoxans in einem polaren Kohlenwasserstoff aufgelöst. Als polarer Kohlenwasserstoff eignet sich ein aliphatischer oder aromatischer Kohlenwasserstoff mit einer statischen Dielektrizitätskonstante, die mindestens der von Toluol entspricht. Bevorzugt wird Toluol verwendet.

Die Polymerisation wird in bekannter Weise in Lösung oder in Suspension, kontinuierlich oder diskontinuierlich, ein- oder mehrstufig bei einer Temperatur von -40 bis 150 °C, vorzugsweise -30 bis 100 °C, insbesondere 0 bis 80 °C, durchgeführt.

Polymerisiert (homo- oder copolymerisiert) werden Olefine der Formel $R^aCH=CHR^b$, worin $R^a$ und $R^b$ gleich oder verschieden sind und ein Wasserstoffatom oder einen Alkylrest mit 1 bis 20 C-Atomen bedeuten, wobei $R^a$ und $R^b$ mit den sie verbindenden C-Atomen einen Ring mit 4 bis 10 C-Atomen bilden können. Beispiele für solche 1-Olefine sind Ethylen, Propylen, 1-Buten, 1-Hexen, 4-Methyl-1-penten, 1-Octen, Norbornen oder Norbornadien. Bevorzugt werden Ethylen, Propylen, 1-Buten und 4-Methyl-1-penten.

Der Gesamtdruck im Polymerisationssystem beträgt 0,5 bis 100 bar. Bevorzugt ist die Polymerisation in dem technisch besonders interessanten Druckbereich von 5 bis 60 bar.

Als Molmassenregler kann Wasserstoff verwendet werden.

Dabei wird die Metallocenverbindung in einer Konzentration, bezogen auf das Übergangsmetall, von $10^{-3}$ bis $10^{-7}$, vorzugsweise $10^{-4}$ bis $10^{-6}$ mol Übergangsmetall pro $dm^3$ Lösemittel angewendet. Das Aluminoxan wird in einer Konzentration von $10^{-5}$ bis $10^{-1}$ mol, vorzugsweise $10^{-5}$ bis $10^{-2}$ mol pro $dm^3$ Lösemittel verwendet. Prinzipiell sind aber auch höhere Konzentrationen möglich.

Die Polymerisation wird in Lösung oder in Suspension durchgeführt. Als Lösemittel wird ein polares aprotisches Lösemittel, insbesondere ein halogenierter Kohlenwasserstoff, mit einer statischen Dielektrizitätskontante $\epsilon$ bei 20 °C von mehr als 3 allein oder im Gemisch, gegebenenfalls mit einem anderen inerten Lösemittel verwendet.

| Beispiele sind | |
|---|---|
| Chloroform | 4,81 |
| Dichlorfluormethan | 5,34 |
| Chlorbenzol | 5,71 |
| p-Chlortoluol | 6,08 |
| Chlordifluormethan | 6,11 |
| 1,1,1-Trichlorethan | 7,53 |
| Dichlormethan | 9,08 |
| o-Dichlorbenzol | 9,82 |
| 1,2-Dichlorethan | 10,65 |
| (vgl. CRC-Handbook of Chemistry and Physics, 70th Ed. 1989/90, E 50). | |

Bevorzugt werden Dichlormethan, 1,2-Dichlorethan und 1,1,1-Trichlorethan.

Der Vorteil der erfindungsgemäßen Verwendung eines halogenierten Kohlenwasserstoffs als Löse- oder Suspensionsmittel besteht in einer wesentlich höheren Polymerisationsaktivität und der höheren Molmasse der Polymeren, verglichen mit dem Stand der Technik.

Die nachfolgenden Beispiele sollen die Erfindung erläutern.

**Beispiel 1:**

750 mg Methylaluminoxan (Handelsprodukt) (13 mmol Al) und 1 µmol $Cp_2ZrCl_2$ wurden in 700 $cm^3$ getrocknetem Dichlormethan unter Argon gelöst, und bei 30 °C in einen zuvor evakuierten, ausgeheizten und mit Argon gespülten 1,5 $dm^3$ Reaktor eingefüllt. Nach Zugabe von 2 bar Ethylen wurde der Reaktorinhalt innerhalb von 5 min auf 50 °C temperiert und 2 h Ethylen bei 7 bar polymerisiert. Nach Abtrennung vom Suspensionsmittel und Vacuumtrocknung wurden 51,4 g PE mit einem $M_w$ = 670000 (nach GPC) und einer Polydispersität $M_w/M_n$ = 2,9 erhalten.

**Vergleichs-Beispiel A:**

Beispiel 1 wurde unter Verwendung von n-Pentan ($\epsilon$ = 1,84) als Suspensionsmittel wiederholt. Die Ausbeute betrug 2,5 g.

**Vergleichs-Beispiel B:**

Beispiel 1 wurde unter Verwendung von Toluol ($\epsilon$ = 2,38) als Suspensionsmittel wiederholt. Die Ausbeute betrug 31,4 g PE mit einem $M_w$ = 395000 (nach GPC) und einer Polydispersität $M_w/M_n$ = 2,9.

**Beispiel 2:**

Bei der Durchführung des Beispiels 1 in Dichlormethan erhielt man bei einer Polymerisationstemperatur von 30 °C 73,0 g Polyethylen mit einem $M_w$ = 984000 (nach GPC) und einer Polydispersität $M_w/M_n$ = 2,8.

**Vergleichs-Beispiel C:**

Beispiel 2 wurde unter Verwendung von Toluol ($\epsilon$ = 2,38) als Suspensionsmittel wiederholt. Die Ausbeute betrug 30,4 g PE mit einem $M_w$ = 938000 (nach GPC) und einer Polydispersität $M_w/M_n$ = 3,0.

**Beispiel 3:**

Bei der Durchführung des Versuchs in 1,1,1-Trichlorethan analog zum Beispiel 2 erhielt man bei einer Polymerisationstemperatur von 30 °C 61,2 g Polyethylen mit einem $M_w$ = 970000 (nach GPC).

**Beispiel 4:**

Bei der Durchführung des Versuchs in 1,2-Dichlorethan unter Verwendung von 0,5 µmol $Cp_2ZrCl_2$ analog zum Beispiel 2 erhielt man bei einer Polymerisationstemperatur von 30 °C 39,7 g Polyethylen mit einem $M_w$ = 1020000 (nch GPC) und einer Polydispersität $M_w/M_n$ = 2,8.

**Beispiele 5 bis 10:**

Analog zum Beispiel 2 wurden in Dichlormethan bei 50 °C mit den in der Tabelle zusammengefaßten Metallocenen Ethylen-Polymerisationen ausgeführt. Die Tabelle enthält Angaben zur eingesetzten Metallocen-Konzentration, Ausbeuten und Molmassen.

**Tabelle**

| Nr. | Katalysator | [µmol Zr] | KA [g PE] | $M_w$ [kg/mol] | $M_w/M_n$ |
|---|---|---|---|---|---|
| 5. | $SiMe_2(Ind)_2ZrCl_2$ | 0,2 | 31,5 | 1072 | 3,1 |
| 6. | $C_2H_4(Ind)_2ZrCl_2$ | 0,2 | 73,6 | 737 | 3,0 |
| 7. | $Si_2Me_4(Ind)_2ZrCl_2$ | 0,2 | 80,1 | 2713,5*) | |
| 8. | $C_3H_6(Ind)_2ZrCl_2$ | 1,0 | 68,5 | 1842,5 | 3,0 |
| 9. | $CPh_2(Fluo)(Cp)ZrCl_2$ | 1,0 | 48,9 | 2261,2*) | |
| 10. | $Cp_2Zr(CH_2Ph)_2$ | 1,0 | 77,7 | 506,1 | 2,9 |

Ind = 1-Indenyl, Fluo = 9-Fluorenyl, Ph = Phenyl

*) $M_\eta$ nach VZ gemäß Mark-Houwink-Gleichung

## Patentansprüche

1. Verfahren zur Herstellung eines Polyolefins durch Polymerisation eines Olefins der Formel $R^a$-CH = CH-$R^b$, worin $R^a$ und $R^b$ gleich oder verschieden sind und ein Wasserstoffatom oder einen $C_1$-$C_{20}$-Alkylrest bedeuten oder $R^a$ und $R^b$ mit dem sie verbindenden C-Atom einen Ring mit 4 bis 10 C-Atomen bilden, bei einer Temperatur von -40 °C bis 150 °C, bei einem Druck von 0,5 bis 100 bar, in Lösung oder in Suspension, in Gegenwart eines Katalysators, welcher aus einer Verbindung der Formel I oder II

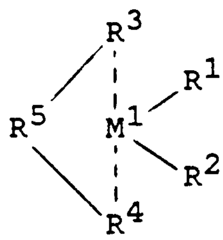 (I) 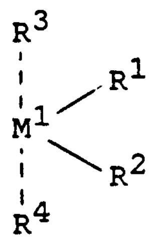 (II),

worin

$M^1$ Titan, Zirkon oder Hafnium ist,

$R^1$ und $R^2$ gleich oder verschieden sind und ein Wasserstoffatom, ein Halogenatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe oder eine $C_8$-$C_{40}$-Arylalkenylgruppe bedeuten,

$R^3$ und $R^4$ gleich oder verschieden sind und einen ein- oder mehrkernigen Kohlenwasserstoffrest, welcher mit dem Zentralatom $M^1$ eine Sandwichstruktur bilden kann, bedeuten,

$R^5$

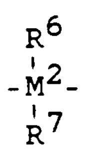 , 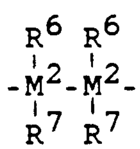 , 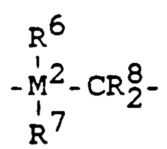 , 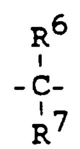 , 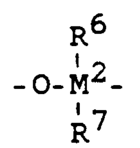 , 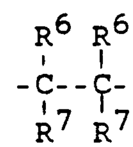 ,

= $BR^6$, = $AlR^6$, -O-, -S-, = SO, = $SO_2$, = $NR^6$, = CO, = $PR^6$ oder = $P(O)R^6$ ist, wobei $R^6$, $R^7$ und $R^8$ gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Fluorarylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder $R^6$ und $R^7$ oder $R^6$ und $R^8$ jeweils mit den sie verbindenden Atomen einen Ring bilden, und

$M^2$ Silizium, Germanium oder Zinn ist, und einem Aluminoxan der Formel III

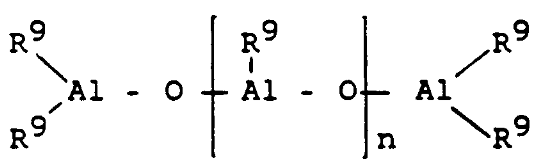 (III)

für den linearen Typ und/oder der Formel IV

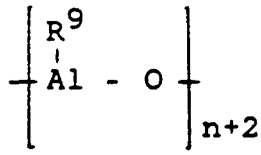 (IV)

für den cyclischen Typ besteht, wobei in den Formeln III und IV die Reste $R^9$ gleich oder verschieden sind und eine $C_1$-$C_6$-Alkylgruppe oder Phenyl oder Benzyl bedeutet und n eine ganze Zahl von 2 bis 50 ist, dadurch gekennzeichnet, daß die Polymerisation in Gegenwart eines polaren aprotischen Lösemittels mit einer statischen Dielektrizitätskonstante $\epsilon$ bei 20 °C von mehr als 3 durchgeführt wird.

**2.** Verfahren nach Anspruch 1, dadurch gekennzeichnet, daß das polare aprotische Lösemittel ein halogenierter Kohlenwasserstoff ist.

**3.** Verfahren nach Anspruch 2, dadurch gekennzeichnet, daß der halogenierte Kohlenwasserstoff ein oder zwei C-Atome pro Molekül enthält.

**4.** Verfahren nach Anspruch 2, dadurch gekennzeichnet, daß der halogenierte Kohlenwasserstoff Dichlormethan ist.

**5.** Verfahren nach Anspruch 1, dadurch gekennzeichnet, daß Ethylen polymerisiert wird.

**Claims**

**1.** A process for the preparation of a polyolefin by polymerization of an olefin of the formula $R^a$-CH = CH-$R^b$ in which $R^a$ and $R^b$ are identical or different and are a hydrogen atom or a $C_1$-$C_{20}$-alkyl radical or $R^a$ and $R^b$, together with the carbon atom connecting them, form a ring having 4 to 10 carbon atoms, at a temperature of from -40 °C to 150 °C, at a pressure of from 0.5 to 100 bar, in solution or in suspension, in the presence of a catalyst which comprises a compound of the formula I or II

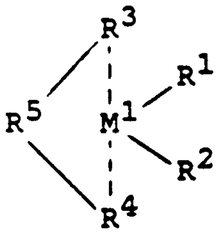 (I) 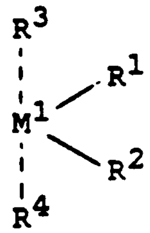 (II),

in which

| | |
|---|---|
| $M^1$ | is titanium, zirconium or hafnium, |
| $R^1$ and $R^2$ | are identical or different and are a hydrogen atom, a halogen atom, a $C_1$-$C_{10}$-alkyl group, a $C_1$-$C_{10}$-alkoxy group, a $C_6$-$C_{10}$-aryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group or a $C_8$-$C_{40}$-arylalkenyl group, |
| $R^3$ and $R^4$ | are identical or different and are a monocyclic or polycyclic hydrocarbon radical which can form a sandwich structure together with the central atom $M^1$, |
| $R^5$ | is |

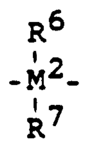 , 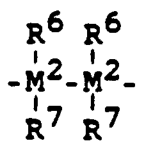 , 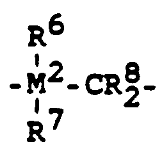 , 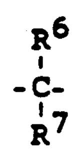 , 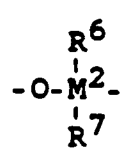 , 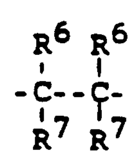 ,

$=BR^6$, $=AlR^6$, -O-, -S-, SO, $=SO_2$, $=NR^6$, $=CO$, $=PR^6$ or $=P(O)R^6$ where $R^6$, $R^7$ and $R^8$ are identical or different and are a hydrogen atom, a halogen atom, a $C_1$-$C_{10}$-alkyl group, a $C_1$-$C_{10}$-fluoroalkyl group, a $C_6$-$C_{10}$-fluoroaryl group, a $C_6$-$C_{10}$-aryl group, a $C_1$-$C_{10}$-alkoxy group, a $C_2$-$C_{10}$-alkenyl group, a $C_7$-$C_{40}$-arylalkyl group, a $C_8$-$C_{40}$-arylalkenyl group or a $C_7$-$C_{40}$-alkylaryl group, or $R^6$ and $R^7$ or $R^6$ and $R^8$ in each case together with the atoms connecting them form a ring, and

$M^2$ is silicon, germanium or tin, and an aluminoxane of the formula III

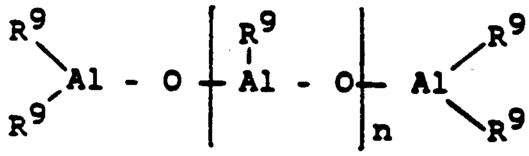

(III)

for the linear type and/or of the formula IV

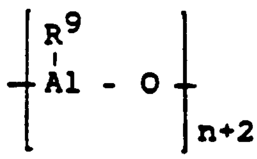

(IV)

for the cyclic type, where in the formulae III and IV, the radicals $R^9$ are identical or different and are a $C_1$-$C_6$-alkyl group or phenyl or benzyl, and n is an integer from 2 to 50, which comprises carrying out the polymerization in the presence of a polar aprotic solvent having a static dielectric constant $\epsilon$ at 20 °C of greater than 3.

2. The process as claimed in claim 1, wherein the polar aprotic solvent is a halogenated hydrocarbon.

3. The process as claimed in claim 2, wherein the halogenated hydrocarbon contains one or two carbon atoms per molecule.

4. The process as claimed in claim 2, wherein the halogenated hydrocarbon is dichloromethane.

5. The process as claimed in claim 1, wherein ethylene is polymerized.

## Revendications

1. Procédé de préparation d'une polyoléfine par polymérisation d'une oléfine de formule $R^a$-CH=CH-$R^b$, ($R^a$ et $R^b$ sont identiques ou différents et représentent chacun un atome d'hydrogène ou un reste alkyle en $C_1$ à $C_{20}$ forment avec l'atome de carbone qui les relie un cycle comportant 4 à 10 atomes de carbone) à une température de -40 °C à + 150 °C, sous une pression de 0,5 à 100 bars, en solution ou en suspension, en présence d'un catalyseur qui consiste en un composé de formule I ou II

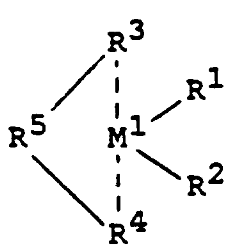

(I)

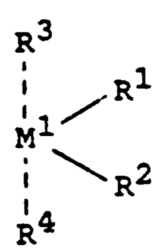

(II),

[formules dans lesquelles

$M^1$ représente un atome de titane, de zirconium ou d'hafnium;

$R^1$ et $R^2$ sont identiques ou différents et représentent chacun un atome d'hydrogène, un atome d'halogène, un groupe alkyle en $C_1$ à $C_{10}$, un groupe alcoxy en $C_1$ à $C_{10}$, un groupe aryle en $C_6$ à $C_{10}$, un groupe aryloxy en $C_6$ à $C_{10}$ un groupe alcényle en $C_2$ à $C_{10}$, un groupe arylalkyle en $C_7$ à $C_{40}$, un groupe alkylaryle en $C_7$ à $C_{40}$ ou un groupe arylalcényle en $C_8$ à $C_{40}$,

$R^3$ et $R_4$ sont identiques ou différents et représentent chacun un reste hydrocarboné monocyclique ou polyclyclique, qui peut former avec l'atome central $M^1$ une structure en sandwich ;

$R^5$ représente

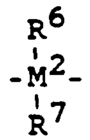 , 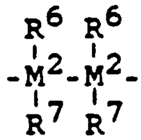 , 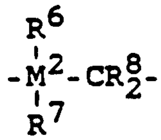 , 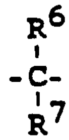 , 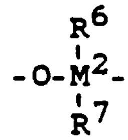 , 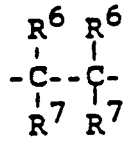 ,

= $BR^6$, = $AlR^6$, -O-, -S-, = SO, = $SO_2$,
= $NR^6$, = CO, = $Pr^6$ ou $P(O)R^6$

formules dans lesquelles $R^6$, $R^7$ et $R^8$ sont identiques ou différents et représentent chacun un atome d'hydrogène, un atome d'halogène,
un groupe alkyle en $C_1$ à $C_{10}$,
un groupe fluoro-alkyle en $C_1$ à $C_{10}$,
un groupe fluoro-aryle en $C_6$ à $C_{10}$,
un groupe aryle en $C_6$ à $C_{10}$,
un groupe alcoxy en $C_1$ à $C_{10}$,
un groupe alcényle en $C_2$ à $C_{10}$,
un groupe arylalkyle en $C_7$ à $C_{40}$ ,
un groupe arylalcényle en $C_8$ à $C_{40}$
ou un groupe alkylaryle en $C_7$ à $C_{40}$,
ou bien $R^6$ et $R^8$ forment, chaque fois avec les atomes qui les relient, un cycle et

$M^2$ représente un atome de silicium, de germanium ou d'étain, et

un aluminoxane de formule III

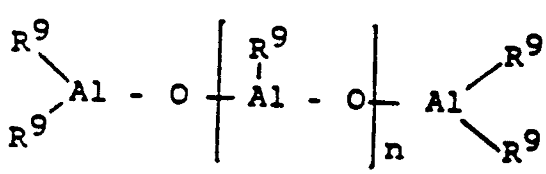

(III)

pour le type linéaire et/ou de formule IV

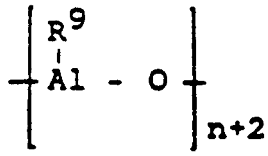

(IV)

pour le type cyclique et, dans les formules III et IV, les restes $R^9$ sont identiques ou différents et représentent chacun un groupe alkyle en $C_1$ à $C_6$ ou phényle ou benzyle, et n est un nombre entier valant 2 à 30], procédé caractérisé en ce qu'on effectue la polymérisation en présence d'un solvant aprotique polaire ayant une constante de diélectricité statique $\epsilon$ à 20 °C supérieure à 3.

2. Procédé selon la revendication 1, caractérisé en ce que le solvant aprotique polaire est un hydrocarbure halogéné.

3. Procédé selon la revendication 2, caractérisé en ce que l'hydrocarbure halogéné contient un ou deux atomes de carbone par molécule.

4. Procédé selon la revendication 2, caractérisé en ce que l'hydrocarbure halogéné est le dichlorométhane.

5. Procédé selon la revendication 1, caractérisé en ce qu'on polymérise l'éthylène.